(19) Europäisches Patentamt
European Patent Office
Office européen des brevets

(11) **EP 3 933 356 A1**

(12) **EUROPEAN PATENT APPLICATION**

(43) Date of publication:
**05.01.2022 Bulletin 2022/01**

(51) Int Cl.:
*G01H 11/08* (2006.01)   *B06B 1/06* (2006.01)

(21) Application number: **20183481.9**

(22) Date of filing: **01.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Université Libre de Bruxelles**
**1050 Bruxelles (BE)**

(72) Inventors:
• **DERAEMAEKER, Arnaud**
  **1150 BRUXELLES (BE)**
• **DUMOULIN, Cédric**
  **1170 BRUXELLES (BE)**

(74) Representative: **AWA Benelux**
**Avenue Josse Goffin 158**
**1082 Bruxelles (BE)**

(54) **PIEZOELECTRIC ULTRASONIC TRANSDUCER EMBEDDED IN CONCRETE STRUCTURES**

(57)   Piezoelectric transducer (10), comprising a sensing element (11) made of a piezoelectric material having a Young's modulus $E_p$ equal to or higher than 30 GPa, a coupling layer (16) completely encapsulating the sensing element (11), and an electromagnetic shielding (14). The sensing element has a cylinder shape with a diameter to height ratio equal to or larger than 2. The coupling layer has a top surface (161), a bottom surface (162) and a peripheral surface (163) extending circumferentially between the top and bottom surfaces. The coupling layer comprises a first coupling material (12) having a first Young's modulus $E_1$ and extending from a top face (111) of the sensing element, and from a bottom face (112) of the sensing element. The coupling layer (16) comprises a second coupling material (13) having a second Young's modulus $E_2$ and extending from a sidewall (113) of the sensing element. $E_1$ is between 1% and 10% of $E_p$, and $E_2$ is equal to or less than 2% of $E_p$.

FIG 1

Printed by Jouve, 75001 PARIS (FR)

EP 3 933 356 A1

**Description**

**Technical field**

The present invention is related to a piezoelectric transducer, in particular an ultrasonic transducer, which can be embedded in concrete for assessing concrete structures.

**Background art**

Embedded ultrasonic transducers for monitoring the health of concrete structures using ultrasound are known from US 2008/0034884. The transducer includes a piezoceramic patch with a water proof coating and associated communication links. The transducer is embedded into the structure prior to the manufacture of the structure. The disclosed system can monitor internal stresses, cracks and other physical forces in the structures during the structures life. The system is capable of providing an early indication of the health of the structure before a failure of the structure can occur.

The inventors have been manufacturing and testing embedded ultrasonic transducers of the above kind both for monitoring the Young's Modulus of cast concrete at very early age and damage detection. These experiments have demonstrated the efficiency of such transducers for structural health monitoring and the possibility of manufacturing such transducers at low cost, but have also revealed that there is a great need of improving the design of the transducer. Dumoulin and Deraemaeker, in "Design optimization of embedded ultrasonic transducers for concrete structures assessment", Ultrasonics 79 (2017) pp. 18-33, have tackled the problem of modelling embedded transducers and optimizing their design for different possible applications. They describe that for typical geometries of disc-shaped embedded transducers, the first mode of vibration is the radial extensional mode (R1). In particular, for a piezoelectric cylindrical patch made of bulk PZT (lead zirconate titanate) of 2 mm thickness and 10 mm diameter, the first radial extensional mode of vibration (R1) occurs around 210 kHz, while the first thickness extensional mode of vibration (TE1) occurs at 990 kHz, and is outside the frequency range of interest for monitoring concrete structures. Even though undesired vibrational modes can be eliminated or their effect greatly reduced by using piezoceramic composites, such as 1-3 piezoelectric composites, such composite materials are much more expensive in comparison to bulk piezoceramic materials such as PZT making them too costly for use as an embedded transducer which is lost in the concrete structure.

It is possible to benefit from the radial mode of actuation of the piezoelectric transducers allowing to keep the thickness of the piezoelectric material to a minimum, and therefore the cost. This can be achieved due to the ability of inexpensive piezoelectric disc elements to generate axial displacements while their main vibration mechanism in the working frequency range is the radial mode, by providing appropriate matching layers between the piezoelectric element and the concrete structure.

The above document describes simulations that were performed to find optimal transition/matching layers and materials exploiting the radial extensional mode of vibration, for different applications (fresh and cured concrete), in a frequency range between 20 kHz and 200 kHz and for three piezoelectric cylindrical elements of 10 mm, 16 mm and 20 mm diameter, and 2 mm thickness each. In the simulations, a stack of three transition layers between the piezoelectric element and the concrete structure was considered.

**Summary of the invention**

Even though optimization processes to find appropriate transition layers and materials are known, there still is a need in the art to provide for a low-cost yet performing piezoelectric transducer that can be embedded in concrete structures. There is a need to provide a transducer of the above kind which is more economical and easier to manufacture.

According to a first aspect of the invention, there is therefore provided a piezoelectric transducer as set out in the appended claims. A piezoelectric transducer, or ultrasound transducer, as described herein comprises a sensing element made of a piezoelectric material having a Young's modulus equal to or higher than 30 GPa. The sensing element has a cylinder shape, advantageously with a diameter to height ratio equal to or larger than 2. A coupling layer completely encapsulates the sensing element. The coupling layer has a top surface, a bottom surface and a peripheral surface extending circumferentially between the top and bottom surfaces. The coupling layer comprises a first coupling material having a first Young's modulus $E_1$, wherein the first coupling material extends from a top face of the sensing element, advantageously to the top surface, and from a bottom face of the sensing element, advantageously to the bottom surface. An electromagnetic shielding is arranged on at least a portion of one or more of the top, bottom and peripheral surfaces. The coupling layer comprises a second coupling material having a second Young's modulus $E_2$, the second coupling material extending from a sidewall of the sensing element, advantageously to the peripheral surface. According to an aspect, $E_1$ is between 1% and 10% of Young's modulus of the piezoelectric material, and $E_2$ is equal to or less than 2% of Young's modulus of the piezoelectric material.

According to a second aspect of the invention, there is provided an assembly as set out in the appended claims. The assembly comprises at least one of the piezoelectric transducer as described herein.

According to a third aspect of the invention, there is provided a concrete structure, as set out in the appended claims. At least one of the piezoelectric transducers as described herein is embedded in the concrete structure.

With the piezoelectric transducers described above, it is obtained that a pure radial mode of vibration of the sensing element can be obtained in an ultrasound frequency range, which combined with the soft radial coupling provided peripherally to the sensing element by the second coupling material, allows for obtaining an improved acoustic transmission. Furthermore, the piezoelectric transducers according to aspects of the invention can be manufactured at low cost allowing them to be embedded in concrete structures.

## Brief description of the figures

Aspects of the invention will now be described in more detail with reference to the appended drawings, wherein same reference numerals illustrate same features.

Figure 1 represents a top view and cross section along section plane A-A of a piezoelectric transducer according to a first embodiment.

Figure 2 represents a top view and cross section along section plane B-B of a piezoelectric transducer according to a second embodiment.

Figure 3 represents an assembly of one or more piezoelectric transducers as described herein and a driving/measuring unit.

Figure 4(a) represents a vertical (upper drawing) and horizontal (lower drawing) cross section of a first comparative piezoelectric transducer of the prior art. Figure 4(b) represents a vertical (upper drawing) and horizontal (lower drawing) cross section of a piezoelectric transducer according to aspects of the invention. Figure 4(c) represents a vertical (upper drawing) and horizontal (lower drawing) cross section of a second comparative piezoelectric transducer of the prior art.

Figure 5 shows the measured amplitude (upper graph) and phase (lower graph) of the input electric impedance in air for the piezoelectric transducers of Fig. 4(a)-(c).

Figure 6 shows the measured amplitude (upper graph) and phase (lower graph) of the input electric impedance in concrete for the piezoelectric transducers of Fig. 4(a)-(c).

Figure 7 shows the acoustic wave transmission in air for a pitch-catch measurement with the piezoelectric transducers of Fig. 4(a)-(c).

Figure 8 shows the acoustic wave transmission in concrete after 12 hours curing for a pitch-catch measurement with the piezoelectric transducers of Fig. 4(a)-(c).

Figure 9 shows the acoustic wave transmission in concrete after 15 hours curing for a pitch-catch measurement with the piezoelectric transducers of Fig. 4(a)-(c).

Figure 10 shows simulated maximal displacement of the top face of the piezoelectric patch (P1), the top surface of the coupling layer (P2) and of the concrete structure (P3) for different values of the stiffness of the first coupling material.

Figure 11 shows simulated static displacement of the top face of the piezoelectric patch (P1), the top surface of the coupling layer (P2) and of the concrete structure (P3) for different values of the stiffness of the first coupling material.

Figure 12 shows simulated maximal displacement of the top face of the piezoelectric patch (P1), the top surface of the coupling layer (P2) and of the concrete structure (P3) for different values of the stiffness of the second coupling material.

Figure 13 shows simulated static displacement of the top face of the piezoelectric patch (P1), the top surface of the coupling layer (P2) and of the concrete structure (P3) for different values of the stiffness of the second coupling material.

## Description of embodiments

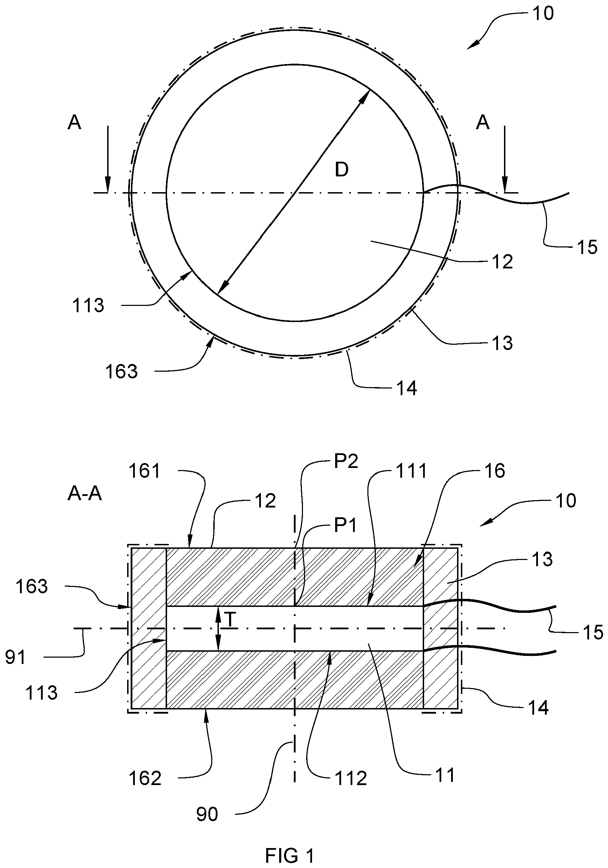

Referring to Fig. 1, a piezoelectric transducer 10 according to the invention comprises a sensing element (patch) 11 made of a piezoelectric material. The sensing patch 11 is advantageously made of a bulk piezoelectric material, in particular a (bulk) piezoelectric ceramic. Suitable examples of piezoelectric ceramic materials are PZT (lead zirconate titanate), barium titanate, bismuth potassium titanate, bismuth sodium titanate and potassium-sodium niobates (KNN - $(K, Na)NbO_3$). Even though the material properties of bulk piezoelectric materials cannot be controlled as well as those of piezoelectric composites, in particular relating to the modes of vibration in a frequency range of interest, bulk materials are much more economical, making the piezoelectric transducer of the present invention more attractive for being lost in a concrete structure.

Advantageously, the (bulk) piezoelectric material has a Young's modulus (modulus of elasticity) equal to or higher than 30 GPa, advantageously equal to or higher than 40 GPa, advantageously equal to or higher than 50 GPa,. The Young's modulus is advantageously 250 GPa or less, advantageously 200 GPa or less, advantageously 150 GPa or less. By way of example, PZT can have a Young's modulus between 50 GPa and 75 GPa.

The sensing patch 11 has a cylinder shape with diameter D at least twice, preferably at least four times the cylinder height T. By way of example, the cylinder of patch 11 can have a diameter D between 10 mm and 25 mm, e.g. 16 mm and a height (thickness) T between 500 $\mu$m and 5 mm, preferably between 1 mm and 4 mm, preferably between 1.5 mm and 3 mm, e.g. 2 mm. If the thickness is too small, the capacitance is increased, rendering it difficult for the amplifiers to drive the transducer at high frequencies. If the thickness is too large, more piezoelectric material is required for making the sensing patch leading to increased cost. With the above dimensions, it is advantageously obtained that the radial and axial modes of vibration are decoupled from each other, and the first mode of vibration of the sensing patch is a pure radial mode and advantageously occurs in a frequency range of interest, e.g. between 80 kHz and 250 kHz.

The sensing patch 11 is completely encapsulated in a coupling layer 16 which ensures a proper coupling interface between the sensing patch 11 and the structure in which the piezoelectric transducer will be embedded, in particular concrete. Purpose of the coupling layer 16 is an efficient transmission of vibration energy between the sensing patch 11 and the (concrete) structure in which piezoelectric transducer 10 is embedded, and additionally for mechanical protection for the typically brittle piezoelectric material of the sensing patch, and to ensure a waterproof layer protecting the sensing patch 11 from moisture. According to an aspect, the coupling layer 16 ensures proper transmission of the ultrasound waves (both axial and radial) generated at the surface of the sensing patch 11. The sensing patch itself, due to the fact that it is free to expand radially, allows an efficient conversion of vibrational displacements along the cylinder axis 90 of the sensing patch 11, referred to as axial displacements, to a radial displacement in a plane 91 orthogonal to axis 90, and vice versa.

The coupling layer 16 has an advantageously planar outer top surface 161, an advantageously planar outer bottom surface 162 and an outer side wall referred to as peripheral surface 163 extending between the top and bottom surfaces 161, 162, along a periphery of the top and bottom surfaces. Even though in Fig. 1 the peripheral surface 163 is drawn as being cylindrical, this is not a requirement, and other suitable shapes can be used. The coupling layer 16 is internally in direct contact with the top face 111, bottom face 112 and side wall 113 of the sensing patch 11.

An electromagnetic shielding 14, such as an electrically conductive coating, e.g. obtained by chemical of physical vapour deposition, or by painting, is applied on part of the outer surface of the coupling layer 16. A suitable example is a Cu and/or a NiCr coating, e.g. each having a thickness between 1 $\mu$m and 5 $\mu$m. In Fig. 1, only the peripheral surface 163 and a peripheral portion of the top and bottom surfaces 161, 162 are coated. Electric wires 15 can be attached to the sensing patch 11 and extend through the coupling layer 16 to provide for an interface for applying and/or measuring an electric signal to or from the sensing patch 11. Electric wires 15 can furthermore be wrapped in a shielding sleeve (not shown) as known in the art.

The coupling layer 16 can have a thickness between 1 mm and 5 mm, preferably between 2 mm and 4 mm, as measured between the top surface 111 and the top face 161, and/or between the bottom surface 112 and the bottom face 162 and/or between the side wall 113 and peripheral surface 163. It will be convenient to note that the thickness between the top surface 111 and the top face 161, and between the bottom surface 112 and the bottom face 162 can be different from or equal to the thickness between the side wall 113 and peripheral surface 163.

Advantageously, the coupling layer 16 comprises a single (layer of) material between the top surface 111 and the top face 161, between the bottom surface 112 and the bottom face 162 and/or between the side wall 113 and peripheral surface 163. Advantageously, the coupling layer is made from two materials having different elastic (Young's) moduli provided at different positions within the coupling layer 16.

A first coupling material 12 interfaces, e.g. is in direct contact, with the top and bottom faces 111, 112 of the sensing patch 11 and has Young's modulus $E_1$. The first coupling material advantageously extends from the top and bottom faces 111, 112 to respectively the top and bottom surfaces 161, 162 of the coupling layer, i.e. the first coupling material advantageously traverses the entire thickness of the coupling layer 16 at positions corresponding to the top and bottom faces 111, 112 of the sensing patch 11. Advantageously, the first coupling material completely covers the top and bottom faces 111, 112.

A second coupling material 13 interfaces, e.g. is in direct contact, with the side wall 113 of the sensing patch 11 and has Young's modulus $E_2$. The second coupling material advantageously extends from the side wall 113 to the peripheral surface 163 of the coupling layer, i.e. the second coupling material traverses the entire thickness of the coupling layer 16 at positions corresponding to the side wall 113 of the sensing patch 11.

The second coupling material 13 forms a complete radial encapsulation of the sensing patch 11 and can form the (only) transition layer between the side wall 113 of the sensing patch 11 and the embedding (concrete) structure. To this end, the electromagnetic shielding 14 is sufficiently flexible to avoid interference with the second coupling material, e.g. due to added radial stiffness. This can be obtained while the electromagnetic shielding 14 has a thickness of 100 $\mu$m or less, advantageously 50 $\mu$m or less, advantageously 25 $\mu$m or less, advantageously 15 $\mu$m or less.

Advantageously, the first coupling material 12 forms the only transition layer between the top face 111 and bottom face 112 of the sensing patch and the embedding (concrete) structure, disregarding the optional electromagnetic shielding layer 14. It is possible to provide one or more additional layers in the coupling layer 16, between the first coupling material 12 and the top surface 161 and bottom surface 162, and/or between the second coupling material 13 and the peripheral surface 163. These additional layers advantageously have similar elastic properties, e.g. similar Young's modulus, as the respective first and second coupling material as defined herein.

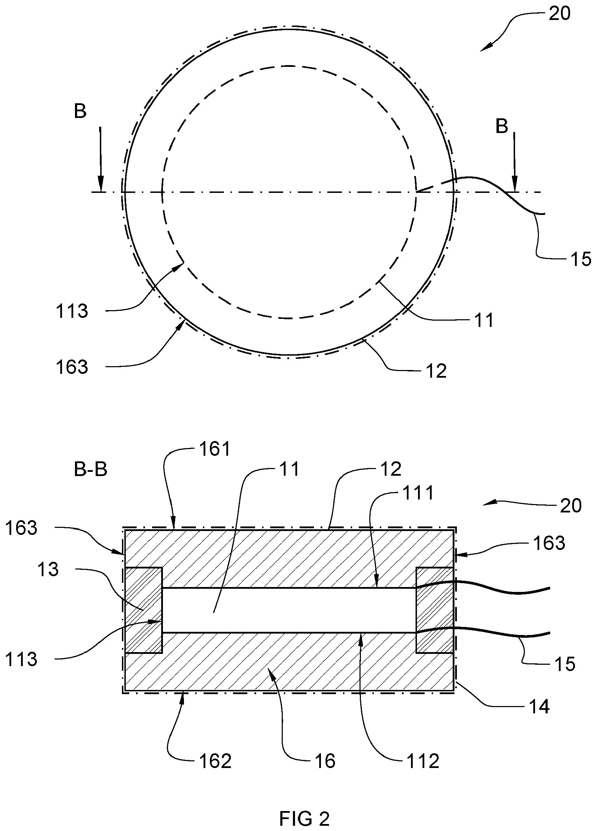

In Fig. 1, the second coupling material 13 completely surrounds both the sensing patch 11 and the first coupling material 12. Referring to Fig. 2, a second embodiment of piezoelectric transducer 20 is shown wherein the second coupling material 13 does not extend until the top and bottom surfaces of the coupling layer 16, and forms a radial encapsulation of the sensing patch 11, but not of the first coupling material 12. This configuration still ensures an unconstrained radial mode of vibration of the sensing patch 11. Also, by way of example, in Fig. 2, the entire outer surface of the coupling layer 16 is coated with an electromagnetic shielding layer 14.

The inventors have surprisingly found that by appropriate selection of the first and second coupling materials 12 and 13, the sensitivity of the piezoelectric transducer can be improved in a frequency range of interest for monitoring concrete structures, while the complexity, and therefore the cost, of the coupling layer is kept low. It has been found that these advantages are obtained when the first coupling material has a Young's modulus $E_1$ equal to or higher than 1% of Young's modulus $E_p$ of the piezoelectric material of the sensing patch 11, i.e. $E_1 \geq 0.01 E_p$, advantageously $E_1 \geq 0.02 E_p$ (2% of $E_p$), advantageously $E_1 \geq 0.025 E_p$ (2.5% of $E_p$). The Young's modulus of the first coupling material $E_1$ advantageously is 20% or less than $E_p$ ($E_1 \leq 0.2 E_p$), advantageously $E_1 \leq 0.15 E_p$, advantageously $E_1 \leq 0.1 E_p$. When the first coupling material is too soft, there is a very poor transmission between motion of the sensing patch 11 at the top face 111 and motion of the concrete at the top surface 161, which forms the interface between the concrete structure and the coupling layer 16 (first coupling material 12). When the first coupling material is too stiff, it tends to block transmission of motion between the sensing patch and the concrete. As will be shown further below, the upper limit of $E_1$ in relation to $E_p$ is less critical than the lower limit.

Suitable values of $E_1$ are at least 0.3 GPa, advantageously at least 0.4 GPa, advantageously at least 0.5 GPa, advantageously at least 0.6 GPa, advantageously at least 0.75 GPa, and advantageously 10 GPa or less, advantageously 8 GPa or less, advantageously 6 GPa or less, advantageously 5 GPa or less. Upper and lower limits can be combined as appropriate to obtain preferred ranges, e.g. between 0.5 GPa and 8 GPa. Suitable examples of the first coupling material are epoxy resins, typically having a Young's modulus between 1 GPa and 5 GPa, e.g. Araldite® 2020 (Hunstman). These resins furthermore have excellent waterproofing properties.

In addition, the second coupling material has a Young's modulus $E_2$ equal to or less than 2% of Young's modulus of the piezoelectric material $E_p$ ($E_2 \leq 0.02 E_p$), advantageously $E_2 \leq 0.015 E_p$ (1.5% of $E_p$), advantageously $E_2 \leq 0.01 E_p$ (1% of $E_p$). The second coupling material should hence be sufficiently soft so as not to hamper the radial extension mode of vibration. Suitable values of $E_2$ are 1 GPa or less, advantageously 0.8 GPa or less, advantageously 0.7 GPa or less, advantageously 0.6 GPa or less, advantageously 0.5 GPa or less. $E_2$ is advantageously at least 10 MPa, advantageously at least 50 MPa. Suitable examples of the second coupling material are closed cell foams, in particular closed cell rigid polyurethane foams, e.g. having a Young's modulus between 0.1 GPa and 0.8 GPa. The closed cells prevent ingress of water towards the sensing patch and therefore provide water proofing capabilities. A suitable example of such a rigid polyurethane foam is obomodulan® 210 (OBO-Werke GmbH, Germany).

The Young's modulus of the first coupling material and the second coupling material can be determined based on ASTM D638-14 or ISO 527-1. Where the materials are rigid foams, ASTM D1623-17 can be used. Suitable strain rates during testing may range between $1{*}10^{-4}$ s$^{-1}$ and $1{*}10^{-3}$ s$^{-1}$.

Advantageously, either one or both the first coupling material and the second coupling material has a compressive strength between 0.5 MPa and 20 MPa, advantageously between 1 MPa and 15 MPa, advantageously 10 MPa or less. Compressive strength of the second coupling material can be measured based on DIN EN ISO 604.

Advantageously, the first coupling material and the second coupling material are different materials, i.e. they have different Young's moduli or $E_1$ is different from $E_2$. In order to leave the radial mode of vibration of the sensing patch 11 as free as possible, the Young's modulus $E_2$ of the second coupling material 13 is advantageously smaller than the Young's modulus $E_1$ of the first coupling material 12, advantageously $E_2 \leq 0.5 E_1$, advantageously $E_2 \leq 0.2 E_1$, advantageously $E_2 \leq 0.1 E_1$.

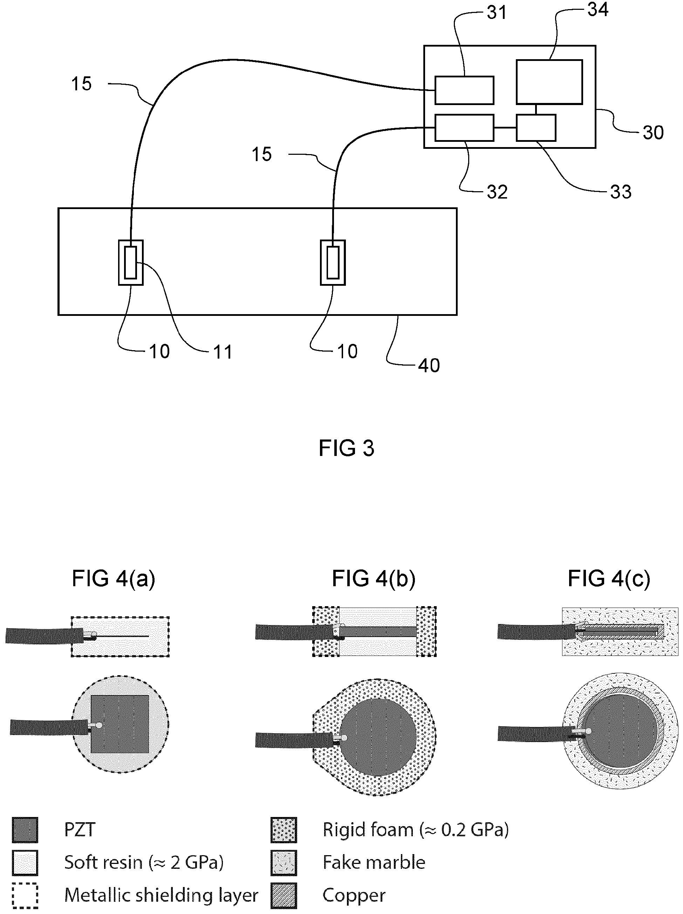

Referring to Fig. 3, the piezoelectric transducers 10 are advantageously connected to a driving and measuring unit 30. In use, transducers 10 are embedded in a concrete structure 40. By way of example, transducers 10 can be positioned at specified positions, e.g. relative to one another, following which concrete is cast which completely embeds them. Fig. 3 shows a concrete structure 40 incorporating two transducers 10 at a specified distance from one another, but only one or even more than two transducers can be used. The electric wire 15 extends out of the concrete structure 40 and can be connected to unit 30. Unit 30 can comprise a driving unit 31 configured to apply an electric signal to the sensing patch 11 of transducer 10 through wire 15 which excites the sensing patch to vibrate at ultrasonic frequency, e.g. between 20 kHz and 350 kHz. Unit 30 can additionally or alternatively comprise a measuring unit 32 configured to measure an electric signal generated by sensing patch 11 responsive to vibration of the structure 40, and transmitted through wire 15 to unit 30. Unit 30 can further comprise a processing unit 33 for processing received signals which can be coupled to a user interface 34. The set-up of Fig. 3 is conceived for so-called pitch-catch measurements, in which one or more transducers act as ultrasound transmitter(s), and other transducer(s) act as receiver(s). It is alternatively possible to use a same transducer 10 both as transmitter and receiver.

**Experiment 1: Comparison of electric performance with prior art transducers**

Referring to Fig. 4, a piezoelectric transducer according to aspects of the invention (represented in Fig. 4(b)) was compared with two other piezoelectric transducers (Fig. 4(a) and (c)) in terms of electrical input impedance and amplitude of the transmitted ultrasonic wave. The transducer of Fig. 4(b) according to the invention was made with a cylindrical PI Ceramic, type PIC 181 PZT sensing patch of 16 mm outer diameter and 2 mm thickness. The coupling layer was formed of an epoxy resin with $E_1$ = 2 GPa, 4 mm thickness in correspondence of the top and bottom faces of the sensing patch and closed cell rigid polyurethane foam $E_2$ = 0.2 GPa, about 4 mm thickness, radially encapsulating the sensing patch. The polyurethane foam was covered with a Cu and Ni/Cr shielding layer of about 2 $\mu$m thickness. The comparative piezoelectric transducers were formed, (i) Fig. 4(a) of a square-based PZT sensing patch of 12 x 12 mm and 0.2 mm thickness completely encapsulated in epoxy resin $E_1$ = 2 GPa, 4 mm thickness, and (ii) Fig. 3(c) of a stack of two PZT piezoelectric discs, each of 15 mm outer diameter and 0.8 mm thickness. The stack was completely encapsulated in a copper shielding layer, which was in turn completely encapsulated in a fake marble coupling layer.

The electrical input impedance was tested with a high precision impedance analyzer (Agilent 4294A), both in air and concrete. For testing in concrete, a setup was prepared in which two identical transducers (of each type of Fig. 4(a)-(c)) were embedded in a concrete non-reinforced beam of size 400 x 100 x 100 mm, with a face-to-face distance of 140 mm between the two transducers. The transducers are attached by their electric wire to a metal bar which was fixed to the mould through a metal frame before casting concrete into the mould. The concrete was prepared according to the composition in table 1.

**Table 1: Concrete composition**

| Component | Mix proportions (kg/m$^3$) |
|---|---|
| CEM I 52.5 N PMES CP2 (Saint Vigor, FR) | 340 |
| Sand 0=4 (Bernieres, FR) | 739 |
| Gravel 8=22 (Bernieres, FR) | 1072 |
| Total water | 184 |
| Total wet density | 2335 kg/m$^3$ |
| Total dry density | 2250 kg/m$^3$ |

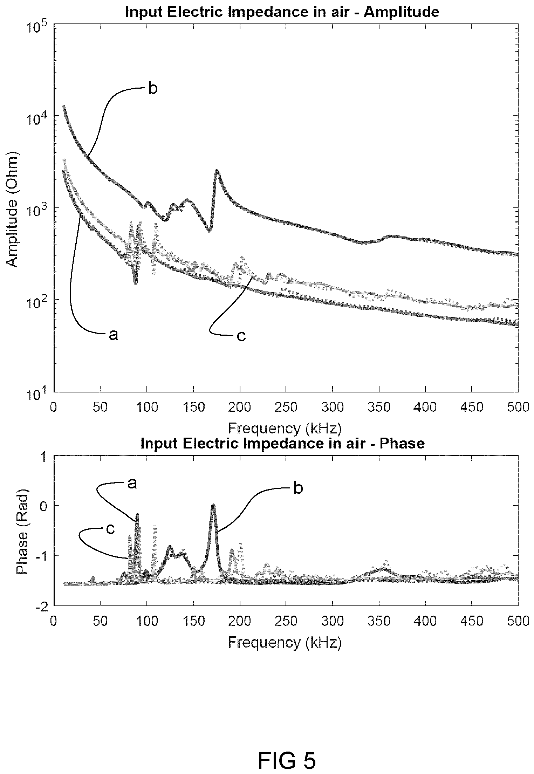

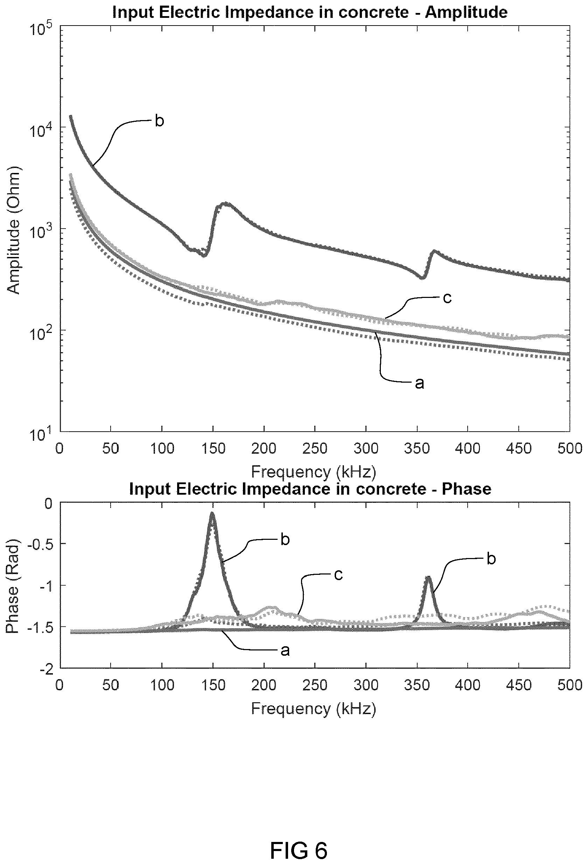

The measured input electric impedance in air was measured separately for each of the two transducers which were subsequently used in the concrete beam. The results are shown in Fig. 5. A solid and a dashed line represent measurements of two different transducers for each type a-c (indicating the transducer of Fig. 4(a)-(c) respectively). The input electric impedance was also measured for the same transducers after embedding in hardened concrete and the results are shown in Fig. 6. For the piezoelectric transducer of the invention, a first clear resonance can be seen from the graphs of Fig. 5 and 6 at about 150 - 170 Hz corresponding to the radial extension mode of vibration, and which is not noticeable for the two other types of transducers.

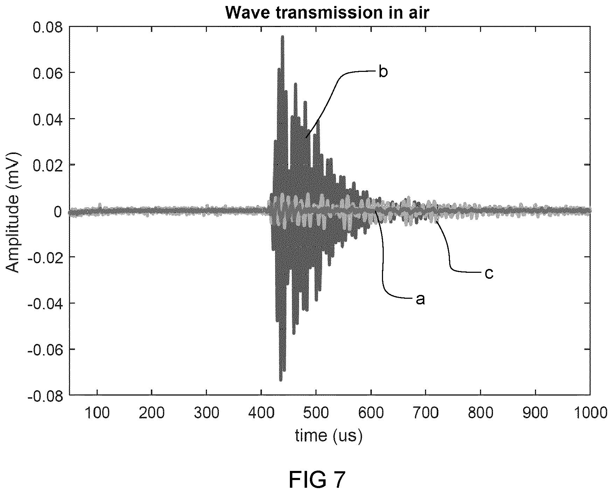

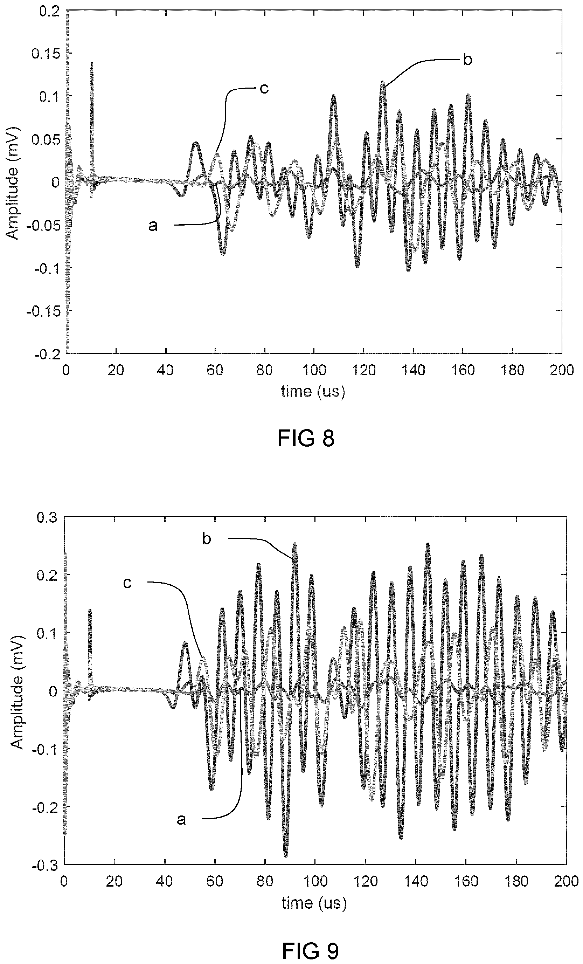

The acoustic transmission measurements consisted of a series of pitch-catch measurements, where the transmitting media tested was air and a hardening concrete beam as described above. In a pitch-catch measurement, two transducers are used, placed at 140 mm face-to-face distance. One transducer is used as emitter and is excited with a square pulse train (10$\mu$s, 200V pulses). The emitter generates an ultrasonic wave which is propagating in the media and which is caught by the second transducer, which acts as receiver. The signal recorded by the receiver is amplified and logged by the data acquisition board. For the sake of accurately comparing the amplitude of the signals, the amplitude of each signal is corrected according to the gain by which it has been amplified. The acoustic wave transmission in air is shown in Fig. 7 for the three types of transducers tested. Fig. 8 shows the acoustic wave transmission in the concrete beam as described above twelve hours after mixing/casting, and in Fig. 9 the acoustic wave transmission is shown fifteen hours after mixing/casting. It can be seen from the above comparative tests that piezoelectric transducers according to aspects of the invention have a much higher acoustic transmission.

**Experiment 2: Influence of the stiffness of the first coupling material on transducer sensitivity**

The influence of the stiffness of the first coupling material on the transducer sensitivity was investigated by simulation. A piezoelectric cylindrical disc of thickness 2 mm and radius 7 mm made of PZT SONOX® P502 material was considered, encapsulated in a coupling layer according to the layout shown in Fig. 1, and embedded in concrete. The top and bottom layers were 2 mm in thickness and the radial (side) layer was 3 mm in thickness. The piezoelectric material was simplified with isotropic material properties which are given in Table 2. The table also gives the material properties of the concrete considered in the present experiment.

Considering the rotational symmetry of the transducer, and mirror symmetry with respect to a mid horizontal plane (plane of axis 91 in Fig. 1), a finite element model of an upper half slice of 10° was considered. The top face of the piezoelectric disc interfaces with the first coupling material and its side wall with the second coupling material according to the structure of Fig. 1. The first and second coupling materials are in turn interfacing with an infinite concrete block having properties as indicated in Table 2. Viscous damping boundaries are introduced on the outer surface of the concrete in order to simulate an infinite concrete block, with no wave reflection on this outer surface. This allows to get rid of any resonant phenomenon in the concrete which is not representative of the transducers' behaviour. The piezoelectric element was used as an actuator, equipotentiality was set on the top face of the piezoelectric disc, and a zero electric potential was applied to the bottom face. The frequency response function was computed and three points were considered to assess the performance of the transducer (Fig. 1): a first point P1 on the central axis 90 located on the top face 111 of the piezoelectric element 11, a second point on axis 90 on the top surface 161 of the coupling layer (first coupling material), and a third point P3 (not shown) on the central axis 90 at the very top of the concrete cylinder, at 12 mm from P1 (10 mm from P2). A fixed value of 1 % damping was introduced in all materials (piezoceramic, first and second coupling materials, and concrete).

**Table 2: Material properties of the piezoelectric disc and concrete**

| Property | Value |
|---|---|
| Concrete | |
| *E Young's modulus* | 40 GPa |
| *v Poisson's ratio* | 0.17 |
| $\rho$ *density* | 2200 kg/m$^3$ |
| Piezoceramic disc | |
| *E Young's modulus* | 54.05 GPa |
| *v Poisson's ratio* | 0.41 |
| $\rho$ *density* | 7740 kg/m$^3$ |
| *thickness* | 2 mm |
| $d_{31}$ *piezoelectric strain coefficient* | -185 10$^{-12}$ pC/N (or m/V) |
| $d_{32}$ *piezoelectric strain coefficient* | -185 10$^{-12}$ pC/N (or m/V) |
| $\varepsilon_{33}^{T}/\varepsilon_0$ *relative permittivity* | 1850 |
| $\varepsilon_0$ vacuum permittivity | 8.854 10$^{-12}$ Fm$^{-1}$ |

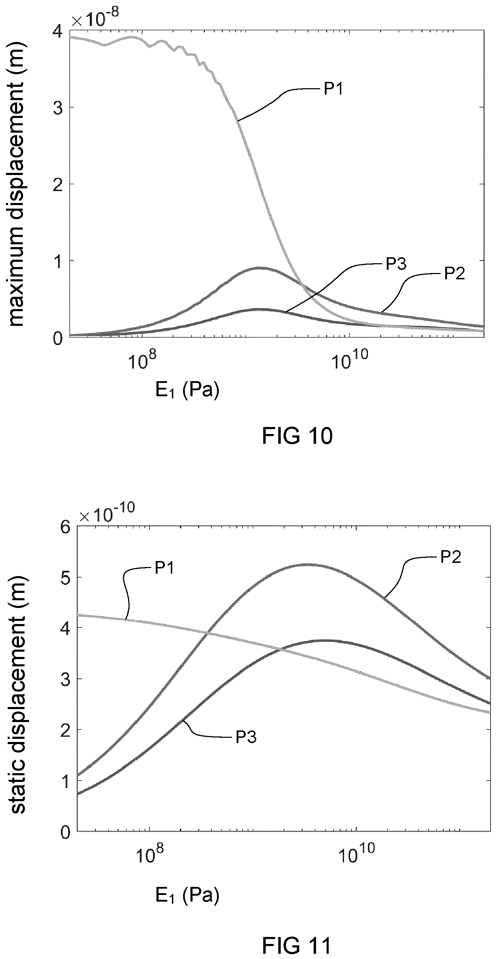

To assess the influence of the stiffness of the first coupling material, the stiffness (Young's modulus) of the second coupling material was set to 0.2 GPa, enabling the piezoelectric element (sensing patch 11) to be considered as radially unconstrained. The properties of the first coupling material were varied in the range given in Table 3. Different frequency response functions (FRF) between the voltage at the sensing patch and the response at each of the three points P1-P3 were computed for different values of the stiffness and density of the first coupling material within the range given in Table 3, i.e. the FRF was evaluated for values of Young's modulus $E_1$ of the first coupling material ranging between $2*10^7$ Pa (0.02 GPa) and $2*10^{11}$ Pa (200 GPa), where the density of the first coupling material varied along with the value of $E_1$ as indicated in Table 3. The frequency response function was computed at the three points P1-P3 between 120 and 300 kHz. The resonant frequency of the piezoelectric disc (patch 11) was about 150 kHz. From these frequency response functions, the maximum value and the static response were extracted and are shown in Figs. 10 and 11 respectively, for all the stiffness values of the first coupling material considered in this experiment.

**Table 3: Material properties of the first coupling material for experiment 2**

| Property | Value |
|---|---|
| $E_1$ Young's modulus | $2 \cdot 10^7$ - $2 \cdot 10^{11}$ Pa |
| $v$ Poisson's ratio | 0.3 |
| $\rho$ density (kg/m$^3$) | $E * 1200 / (4 \cdot 10^9)$ |

The results of Figs. 10 and 11 show that the amplitude of the wave generated at all locations is affected by the stiffness of the first coupling material. When the first coupling material is very soft, there is a large motion at P1 (the top of the piezoelectric element (patch)), but almost no motion at P3 (the concrete top). Then, as the stiffness of the first coupling material increases, displacement of the top surface of both the coupling layer (P2) and the concrete (P3) start to increase, up to a maximum value which occurs at about 1.5 GPa for the dynamic resonant behaviour, and about 5 GPa for the static response.

When the first coupling material is very stiff, it tends to block the acoustic wave which cannot be transmitted efficiently from the piezoelectric disc to the concrete. The range in which the transducer was found to be most efficient was between 0.5 and 10 GPa. Epoxy materials typically have a stiffness falling within this range, so this material is an excellent choice as first coupling material. The value of 0.5 GPa corresponds to about 1% of Young's modulus of the piezoelectric disc, and about 1%-1.5% of Young's modulus of the concrete.

**Experiment 3: Influence of the stiffness of the second coupling material on transducer sensitivity**

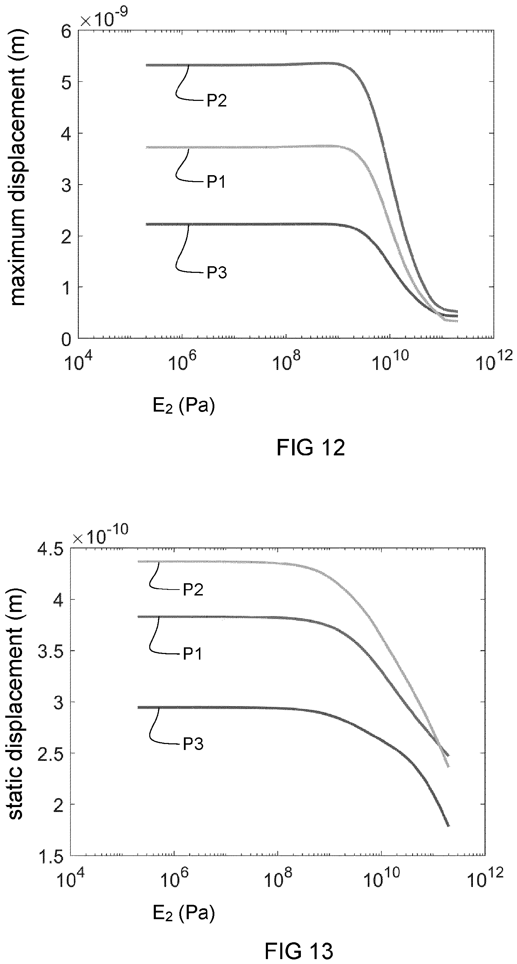

The previous experiment 2 was repeated, but now instead of varying the stiffness of the first coupling material, the stiffness of the second coupling material was varied. The same finite element model as in experiment 2 was used, with same properties for the piezoelectric disc and the concrete. The properties of the first coupling material were set to be $E_1$ = 4 GPa, $v$ = 0.4, and $\rho$ = 1200 kg/m$^3$. The properties of the second coupling material were varied in the range given in Table 4. Different frequency response functions (FRF) between the voltage at the sensing patch and the response at each of the three points P1-P3 were computed for different values of the stiffness and density of the second coupling material within the range given in Table 4. The frequency response function was computed at the three points P1-P3 between 120 and 300 kHz. From these frequency response functions, the maximum value and the static response were extracted and are shown in Figs. 12 and 13 respectively, for all the stiffness values of the second coupling material considered in this experiment.

**Table 4: Material properties of the second coupling material for experiment 3**

| Property | Value |
|---|---|
| $E_2$ Young's modulus | $2 \cdot 10^5$ - $2 \cdot 10^{11}$ Pa |
| $v$ Poisson's ratio | 0.3 |
| $\rho$ density (kg/m$^3$) | $E * 2200 / (70 \cdot 10^9)$ |

The graphs of Fig. 12 and 13 show that the amplitude of the acoustic wave generated at all locations P1-P3 is diminished by the radial constraint when the value of $E_2$ is higher than about 1 GPa. This corresponds to about 2% of Young's modulus of the piezoelectric material (Table 2). For the static response, the amplitude is already affected at lower values of stiffness (about 0.2 GPa), but the decrease of efficiency/sensitivity is not significant until 1 GPa, and it is the dynamic resonant response which is most important for concrete sensing applications.

It will be convenient to note that the material properties (Young's modulus, density, Poisson's ratio, etc.) and the piezoelectric properties of the materials used in the transducers according to the invention can be fairly assumed to have linear behaviour. As a result, the above simulation results remain applicable when the material and/or piezoelectric properties are varied within the scope defined by the appended claims.

**Claims**

1. Piezoelectric transducer (10, 20), comprising:

a sensing element (11) made of a piezoelectric material having a Young's modulus equal to or higher than 30 GPa, wherein the sensing element has a cylinder shape with a diameter to height ratio equal to or larger than 2, a coupling layer (16) completely encapsulating the sensing element (11), wherein the coupling layer has a top surface (161), a bottom surface (162) and a peripheral surface (163) extending circumferentially between the top and bottom surfaces, wherein the coupling layer comprises a first coupling material (12) having a first Young's modulus $E_1$, wherein the first coupling material extends from a top face (111) of the sensing element, and from a bottom face (112) of the sensing element, and

an electromagnetic shielding (14) arranged on at least a portion of one or more of the top, bottom and peripheral surfaces,

**characterised in that**:

the coupling layer (16) comprises a second coupling material (13) having a second Young's modulus $E_2$, the second coupling material (13) extending from a sidewall (113) of the sensing element,

$E_1$ is between 1% and 10% of Young's modulus of the piezoelectric material, and

$E_2$ is equal to or less than 2% of Young's modulus of the piezoelectric material.

2. Piezoelectric transducer of claim 1, wherein $E_1$ is between 0.5 GPa and 10 GPa.

3. Piezoelectric transducer of claim 1 or 2, wherein $E_2$ is equal to or less than 1 GPa, and preferably at least 10 MPa.

4. Piezoelectric transducer of any one of the preceding claims, wherein $E_1$ is greater than $E_2$.

5. Piezoelectric transducer of any one of the preceding claims, wherein the first coupling material (12) extends from the top face (111) of the sensing element (11) to the top surface (161), and from the bottom face (112) of the sensing element to the bottom surface (162).

6. Piezoelectric transducer of any one of the preceding claims, wherein the second coupling material (13) extends from the sidewall (113) of the sensing element (11) to the peripheral surface (163).

7. Piezoelectric transducer of any one of the preceding claims, wherein the second coupling material (13) is a closed cell foam.

8. Piezoelectric transducer of any one of the preceding claims, wherein the first coupling material (12) is an epoxy resin.

9. Piezoelectric transducer of any one of the preceding claims, wherein the sensing element has a diameter (D) to height (T) ratio equal to or larger than 4.

10. Piezoelectric transducer of any one of the preceding claims, wherein the electromagnetic shielding (14) has a thickness of 100 $\mu$m or less.

11. Assembly, comprising at least one piezoelectric transducer (10, 20) of any one of the preceding claims and a driving unit (30) configured for being electrically connected to the sensing element (11), wherein the driving unit is configured to operate the sensing element as an ultrasonic transmitter and/or as an ultrasonic receiver.

12. Concrete structure (40), comprising the piezoelectric transducer (10, 20) of any one of the claims 1 to 10 embedded therein.

13. Concrete structure of claim 12 wherein concrete material of the concrete structure (40) is in direct contact with the top surface (161), the bottom surface (162) and the peripheral surface (163), or with the electromagnetic shielding (14) arranged thereon.

FIG 1

FIG 2

FIG 3

FIG 4(a)

FIG 4(b)

FIG 4(c)

| | PZT | | Rigid foam (≈ 0.2 GPa) |
| --- | --- | --- | --- |
| | Soft resin (≈ 2 GPa) | | Fake marble |
| | Metallic shielding layer | | Copper |

EP 3 933 356 A1

FIG 5

**FIG 6**

FIG 7

FIG 8

FIG 9

FIG 10

FIG 11

FIG 12

FIG 13

Europäisches
Patentamt

European
Patent Office

Office européen
des brevets

# EUROPEAN SEARCH REPORT

Application Number

EP 20 18 3481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ryan Magruder: "OnScale - Designer Examples - General Transducer 3D -CAD", , 4 May 2020 (2020-05-04), XP055756274, Retrieved from the Internet: URL:https://support.onscale.com/hc/en-us/articles/360006413792-Transducer-3D-CAD [retrieved on 2020-12-03] | 1-10 | INV. G01H11/08 B06B1/06 |
| Y | * page 1, Figure (left) * * page 1, Par. Model Description * * page 2, Figure * * page 2, Par. Parametric Variables * ----- | 11-13 | |
| Y,D | US 2008/034884 A1 (SONG GANGBING [US] ET AL) 14 February 2008 (2008-02-14) * figures 2-3 * ----- | 11-13 | |
| A | AMARTEJA KOCHERLA ET AL: "Embedded electrical impedance-based PZT sensor for monitoring hydrating concrete: development and evaluation", SMART MATERIALS AND STRUCTURES, IOP PUBLISHING LTD., BRISTOL, GB, vol. 29, no. 5, 8 April 2020 (2020-04-08), page 55038, XP020353134, ISSN: 0964-1726, DOI: 10.1088/1361-665X/AB6955 [retrieved on 2020-04-08] * figure 2 * ----- | 11-13 | |
| A | US 2008/225376 A1 (KIM HYEUNG-YUN [US]) 18 September 2008 (2008-09-18) * the whole document * ----- | 1-13 | |

TECHNICAL FIELDS
SEARCHED (IPC)

B06B
G01H
G01M

The present search report has been drawn up for all claims

| Place of search | Date of completion of the search | Examiner |
|---|---|---|
| The Hague | 7 December 2020 | Lameloise, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 933 356 A1

## ANNEX TO THE EUROPEAN SEARCH REPORT
## ON EUROPEAN PATENT APPLICATION NO.

EP 20 18 3481

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2020

| Patent document cited in search report | Publication date | Patent family member(s) | Publication date |
|---|---|---|---|
| US 2008034884 A1 | 14-02-2008 | NONE | |
| US 2008225376 A1 | 18-09-2008 | NONE | |

EPO FORM P0459

For more details about this annex : see Official Journal of the European Patent Office, No. 12/82

**EP 3 933 356 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080034884 A

**Non-patent literature cited in the description**

- **DUMOULIN ; DERAEMAEKER.** Design optimization of embedded ultrasonic transducers for concrete structures assessment. *Ultrasonics,* 2017, vol. 79, 18-33